Europäisches Patentamt

European Patent Office

Office européen des brevets

(19)

(11) EP 1 282 278 A1

(12) EUROPEAN PATENT APPLICATION

(43) Date of publication:
05.02.2003 Bulletin 2003/06

(51) Int Cl.$^7$: H04L 27/20

(21) Application number: 01306511.5

(22) Date of filing: 30.07.2001

(84) Designated Contracting States:
AT BE CH CY DE DK ES FI FR GB GR IE IT LI LU
MC NL PT SE TR
Designated Extension States:
AL LT LV MK RO SI

(71) Applicant: LUCENT TECHNOLOGIES INC.
Murray Hill, New Jersey 07974-0636 (US)

(72) Inventor: Obernosterer, F. G. E., Dr.
91367 Weissenohe (DE)

(74) Representative: Sarup, David Alexander
Lucent Technologies NS UK Limted,
5 Mornington Road
Woodford Green, Essex IG8 OTU (GB)

(54) **Digital circuit for the approximate realisation of a GMSK modulation**

(57)     The invention relates to a digital circuit for the approximate realisation of a GMSK-modulated baseband signal. An object of the invention is to provide a new and improved approach for providing a more precise approximate realisation of GMSK-modulated baseband signals based on a binary signal stream ($a_k$).
According to the invention it is proposed to provide a digital circuit comprising filter means (3) for the generation of an output signal having samples of inphase components (I) and quadrature components (Q) at a desired sampling frequency with a pre-processing device (2) having a first signal path adapted to perform a linear transformation and a second signal path adapted to perform a non-linear transformation for transforming the binary signal stream ($a_k$) in first samples ($x1_k$) of complex signal values and simultaneously in second samples ($x2_k$) of complex signal values, respectively, to be fed into the filter means (3).

Fig. 1

EP 1 282 278 A1

**Description**

The invention relates to a digital circuit for the approximate realisation of a GMSK-modulated baseband signal according to the preamble of claim 1.

As known for a person skilled in the art, especially in communication systems such as for example mobile communication systems one frequently used type of modulation is the so called GMSK-modulation (Gaussian Minimum Shift Keying - modulation), which belongs to the group of digital continuous phase modulation (CPM) techniques. One of the most important application of such GMSK-modulation is a communication system or network based on the GSM-standard, i.e. the Global System for Mobile radio communication standard.

For the digital realisation of GMSK-baseband signals there are several techniques which are mainly based on ROM (Read Only Memory) look-up-tables. Such techniques are disclosed for example in EP-A-0 426 560, EP-A-0 417 390 and EP-A-0 417 390.

A different approach for generating the inphase components and quadrature components of the GMSK-baseband signal by means of a digital signal processing is disclosed in EP-A-0 486 101. According to that document a digital circuit is described which uses a phase generator in connection with a linear filter arrangement for generating the inphase components and the quadrature components. The phase generator is producing in dependence on respective two subsequent binary input values the real values 1 or -1 or the imaginary values j or -j as binary coded phase generator output values. These phase generator output values are fed to the linear filter arrangement comprising a filter for generating the inphase components and a filter for generating the quadrature components. Since the phase generator is producing in an alternating manor the real and the imaginary output values the linear filter arrangement is only fed by the sign information. The coefficients of the linear filer arrangement may be determined by using several approaches as generally known by persons skilled in the art. Subsequent to the generation of the inphase and quadrature components a digital to analogue conversion and low pass filtering have to be applied in order to generate the continuous time baseband waveform prior to modulate a carrier signal therewith.

One of the most disadvantages of the digital circuit arrangement according to that EP-A-0 486 101 is, that the generated GMSK-waveform approximation has considerable amplitude and phase deviations from the ideal GMSK-waveform which has a constant amplitude. Especially the high amount of the amplitude deviation results in difficulties by observing predefined tolerance limits, especially with regard to allowable power-versus-time-tolerances.

An object of the invention is therefore to provide a new and improved approach for providing a more precise approximate realisation of GMSK-modulated baseband signals.

The inventive solution is given by a digital circuit and a mobile radio system comprising the features according to claim 1 and claim 15, respectively.

Advantage and/or preferred refinements or embodiments are the subject matter of the dependent claims.

According to the invention it is proposed to provide a digital circuit comprising filter means for the generation of an output signal based on a binary signal and having samples of inphase components and quadrature components at a desired sampling frequency with a preceding transformation device having a first signal path adapted to perform a linear transformation and a second signal path adapted to perform a non-linear transformation for transforming the binary signal stream in first samples of complex signal values and simultaneously in second samples of complex signal values, respectively.

It turned out that by the use of the combination of a linear processing together with a non-linear processing of a given binary signal the precision of the approximation is significantly better than in the known digital circuit arrangement according to the above identified EP-A-0 486 101.

According to a very preferred refinement the filter means comprises two linear filter devices, one of which is fed by the linear transformed complex signal values and the other of which is fed by the non-linear transformed complex signal values.

It is further suggested to adapt each of the linear filter devices to generate an output signal having samples of inphase components and quadrature components at the desired sampling frequency. The inphase components and quadrature components may be respectively combined to one GMSK-output signal having higher order terms. Preferably for combining the samples of inphase components and the samples of quadrature components the filter means additionally is provided with an adder adapted to perform a complex addition.

Practically each of the two linear filter devices comprises a finite impulse response filter which are insensitive to rounding errors so that a smaller symbol length is needed in comparison to recursive filters.

For realisation the non-linear transformation preferably a register chain with an applied clock signal corresponding to the period of respective two subsequent binary signals and at least one multiplier for obtaining higher order terms, preferably including at least the term of the second order, leading to the extended and non-linear structure. The sampling frequency should be an integral multiple of that clocking frequency.

Preferably the inventive digital circuit is further provided with means for oversampling the first and second complex signal samples if the sampling period is not equal to the respective symbol period comprised therein.

According to a preferred embodiment the binary signal is provided in an unipolar representation which is first converted to a bipolar preferably coded representation and than transformed into the complex signal samples.

Moreover since preferably two linear filter devices are fed by two different input signals the coefficients of each of the two linear filter devices can be calculated independent of each other and hence should be different to each other. However for calculating the coefficients several approaches may be applied as known by persons skilled in the art.

The inventive digital circuit preferably is apt to be used in a mobile radio system, especially in a mobile radio system following the GSM-standard.

Practically, the inventive circuit is adapted to operate with amplitude modulated pulse signals. However, as an alternative an adaptation to radio frequency and/or phase modulated signals is suggested.

The invention is exemplary described in the following on the basis of a preferred embodiment according to the invention and with regard to the appended drawing, in which

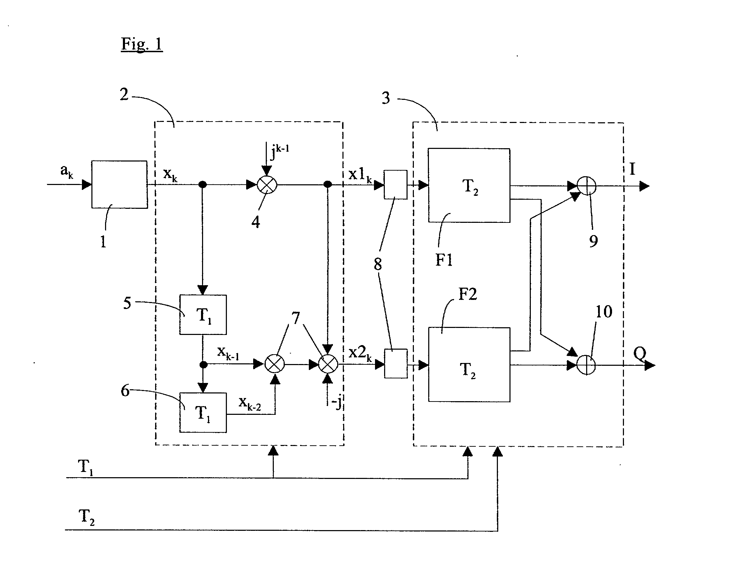

Fig. 1    is exemplary and schematically depicting a preferred inventive structure of digital modulator for the approximate realisation of a GMSK-modulated baseband signal.

Referring to Fig. 1 exemplary showing a preferred structure of essential digital parts of the inventive GMSK-baseband signal modulator an input $a_k$, $k \in \{0,...,N\}$, comprises a stream of binary data symbols "0" and "1" respectively spaced by a clock period $T_1$.

Output is a complex valued stream of baseband signal samples I indicating inphase components and Q indicating quadrature components at a desired sampling frequency $1/T_2$. The sampling frequency $1/T_2$ should be an integral multiple of $1/T_1$.

Subsequently, a digital to analogue conversion and a low-pass filtering have to be applied to the inphase component I and quadrature component Q of the complex valued stream in order to generate a continuous time baseband waveform as known by persons skilled in the art and thus will be described not in detail.

The digital circuit of the modulator as depicted in Fig. 1 comprises a converter 1 for converting the input stream $a_k$ of the unipolar binary data samples "0" and "1" into a bipolar binary data stream $x_k$ comprising samples of "-1" and "+1" according to a definable coding. For example, the bipolar binary data stream $x_k$ may be generate according to:

$$x_k = 1\text{-}2 \cdot (a_k \oplus a_{k-1}),$$

wherein "$\oplus$" is a modulo 2 addition.

A pre-processing means 2 comprises a linear signal path and a non-linear signal path for transforming the real values of the bipolar samples stream $x_k$ into a complex representation thereof consisting of a first complex signal samples stream $x1_k$ and a second complex signal stream samples $x2_k$, both of which then are fed into a linear filter means 3.

The complex signal value $x1_k$ is obtained by passing the input samples $x_k$ via the linear signal path of the pre-processing means 2 comprising a multiplier 4 for multiplying the input samples $x_k$ with the value $j^{k-1}$, thereby duplicating the amplitude of $x_k$.

The pre-processing means 2 is further comprising two registers 5 and 6, both of which are clocked by the clock period $T_1$ to receive the term $x_{k-1}$ delayed for one clock period at the end of the register 5 and $x_{k-2}$ delayed for two clock period after passing both registers 5 and 6. Accordingly, based on the obtained time delayed samples $x_{k-1}$ and $x_{k-2}$ of the input samples $x_k$ a non-linear transformation can be performed.

Therefore, multipliers 7 are provided for multiplying the time delayed samples $x_{k-1}$ and $x_{k-2}$ by each other, by the value -j and by complex signal value $x1_k$. Consequently, the obtained complex signal value $x2_k$ is based on a series expansion truncated with the term of second order.

The complex valued samples $x1_k$ and $x2_k$ are fed into two parallel FIR (finite impulse response) filters F1 and F2 comprised by linear filter means 3, i.e. the samples $x1_k$ to F1 and the samples $x2_k$ to F2.

If, however the sampling clock $T_2$ of the filters F1 and F2 is not equal to the symbol clock period $T_1$, an oversampling is performed and the symbols samples $x1_k$ and $x2_k$ has to be respectively added with "0" accordingly. Thus, the inventive circuit is provided with oversampling means 8 for adapting the symbols samples $x1_k$ and $x2_k$ by filling up the respective necessary positions adding "0".

Accordingly, each of the filters F1 and F2 fed by the complex valued samples $x1_k$ or $x2_k$, adapted for over-sampling or not, has different inputs and hence, different coefficients, with several possibilities for the implementation thereof. Since the implementation thereof is obvious for a person skilled in the art this is not discussed in detail here. However, one exemplary calculation of the coefficients of the filters F1 and F2 is given below.

Each of the filters F1 and F2 is generating an inphase component and an quadrature component which are respectively added by an first adder 9 for the complex addition of the inphase components and a second adder 10 for the complex addition of the quadrature components. As explained above, the added inphase and quadrature output samples are fed to an digital to analogue converter with a subsequent low-pass filtering applied thereto.

With the above condition, the combined inphase components I and quadrature components Q are the approximate GMSK-baseband signal $s_{approx}$ based on:

$$s_{approx}(t) = \sum_{k=0}^{N-1} j^{k-1} x_k \cdot F1(kT_2) + j^{k-1} x_k \cdot (-j) x_{k-1} x_{k-2} \cdot F2(kT_2) \ .$$

The first term of such approximated GMSK-baseband signal is similar to a linear approximation of a GMSK-modulation, as described for example by the above-referenced EP-A-0 486 101. The second term, however, represents the expansion in series with higher order terms resulting in a significantly more precise approximation in comparison the approximation of said EP-A-0 486 101.

With regard to the exemplar inventive modulator depicted in fig. 1, it should be mentioned that the product of the symbol samples $x_{k-1}$ and $x_{k-2}$ also can be achieved by an exclusive-OR-operation based on the input stream $a_k$ with a subsequent unipolar to bipolar conversion, for example according to:

$$x_{k-1} \cdot x_{k-2} = 1-2 \cdot (a_{k-1} \oplus a_{k-2}).$$

Moreover, the value (-j) in the non-linear path of the pre-processing means 2 can be directly integrated into the discrete representation of the filter F2.

Based on an exemplar calculation of the coefficients of the filters F1 and F2 complying with a fourfold oversampling and by using the quotations as disclosed in Laurent, P.A. "Exact and Approximate Construction of Digital Phase Modulations by Superposition of Amplitude Modulated Pulses (AMP)", IEEE Trans. Comm., Vol. COM-34, pages 150-160, (1986), the respective twenty one coefficients of F1 and F2 for the digital implementation are:

| | |
|---|---|
| $F1_1 = 0$ | $F2_1 = 0$ |
| $F1_2 = 0$ | $F2_2 = 0{,}0004$ |
| $F1_3 = 0{,}0007$ | $F2_3 = 0{,}0026$ |
| $F1_4 = 0{,}0061$ | $F2_4 = 0{,}0110$ |
| $F1_5 = 0{,}0315$ | $F2_5 = 0{,}0315$ |
| $F1_6 = 0{,}1076$ | $F2_6 = 0{,}0593$ |
| $F1_7 = 0{,}2606$ | $F2_7 = 0{,}0732$ |
| $F1_8 = 0{,}4791$ | $F2_8 = 0{,}0592$ |
| $F1_9 = 0{,}7059$ | $F2_9 = 0{,}0314$ |
| $F1_{10} = 0{,}8693$ | $F2_{10} = 0{,}0110$ |
| $F1_{11} = 0{,}9268$ | $F2_{11} = 0{,}0026$ |
| $F1_{12} = 0{,}8691$ | $F2_{12} = 0{,}0004$ |
| $F1_{13} = 0{,}7055$ | $F2_{13} = 0$ |
| $F1_{14} = 0{,}4786$ | $F2_{14} = 0$ |
| $F1_{15} = 0{,}2602$ | $F2_{15} = 0$ |
| $F1_{16} = 0{,}1074$ | $F2_{16} = 0$ |
| $F1_{17} = 0{,}0314$ | $F2_{17} = 0$ |
| $F1_{18} = 0{,}0061$ | $F2_{18} = 0$ |
| $F1_{19} = 0{,}0007$ | $F2_{19} = 0$ |
| $F1_{20} = 0$ | $F2_{20} = 0$ |
| $F1_{21} = 0$ | $F2_{21} = 0$ |

The coefficients having the value "0" are identified to demonstrate the time based relation between the respective coefficients of F1 and F2.

As mentioned, the upper part of the digital circuit according to Fig. 1 comprising the unipolar to bipolar converter 1, the multiplier 4 and filter F1 resulting in the first linear approximated convolution term of the approximated GMSK-baseband signal, i.e. $j^{k-1}x_k*F1(kT_2)$, is equivalent to the prior art circuit as described in the referenced EP-A-0 486 101. Thus a performance comparison with regard to that prior art circuit can be given with regard to the amplitude deviations and phase deviations between a GMSK-approximation "$s_{approx}(t)$" and an ideal GMSK-signal "$s_{GMSK}(t)$" having an constant amplitude of "1" but an information of the phase.

Accordingly, subsequent to the digital to analogue conversion a normalised amplitude error a(t) and a phase error $\Delta\varphi$ (t) can be defined as:

$$a(t) \; |q(t)| \; -1,$$

and

$$\Delta\varphi(t) = \arg(q(t)),$$

wherein

$$q(t) =: \frac{S_{approx}(t)}{S_{GMSK}(t)}.$$

Based thereon, the performance comparison results in:

|  | approximated according to EP-A-0 486 101 | approximated based on the invention |
|---|---|---|
| max. amplitude error =:max(a(t)) | +0,67dB | +0,017dB |
| min. amplitude error =:min(a(t)) | -0,54dB | -0,017dB |
| max. phase error =:max($|\Delta\varphi(t)|$) | ±2,9° | ±0,5° |
| RMS phase error = :sqrt (E{$\Delta\varphi^2(t)$}) | 1,7° | 0,31° |

This comparison clearly indicates that the accuracy of a GSMK approximation significantly increases by applying the proposed inventive approach. Especially the small peak amplitude deviation, i.e. max((at)) and min(a(t)), of ± 0,017dB obtained by the invention is of practical interest for mobile radio systems since dependent on the specific standard pre-given maximum deviations are specified, such as for example for an GSM-based mobile radio system a maximum deviation of ± 1dB is specified.

It should be obvious for a person skilled in the art, that the inventive approach can be modified according to specific applications without departing the scope of the appended set of claims.

In particular, even if the invention is described on an exemplary embodiment based on an AMP-approximation, i.e. amplitude modulated pulse approximation, the invention is covering embodiments based on radio frequency modulated and/or phase modulated signals.

**Claims**

1. Digital circuit for the approximate realisation of a GMSK-modulated baseband signal based on a binary signal ($a_k$), comprising filter means (3) for the generation of an output signal having samples of inphase components (I) and quadrature components (Q) at a desired sampling frequency,
   **characterized by**
   a pre-processing device (2) having linear transforming means (4) and non-linear transforming means (5, 6, 7) for transforming the binary signal ($a_k$) in first and in second samples ($x1_k$, $x2_k$) of complex signal values to be fed into the filter means (3, F1, F2).

2. Digital circuit according to claim 1, wherein the filter means (3) comprises two linear filter devices (F1, F2), one of which is fed by the linear transformed complex signal values ($x1_k$) and the other of which is fed by the non-linear transformed complex signal values ($x2_k$).

3. Digital circuit according to claim 2, wherein each of the two linear filter devices (F1, F2) comprises different coefficients to each other.

4. Digital circuit according to claim 2 or 3, wherein each of the linear filter devices (F1, F2) is adapted to generate a first or second output signal having samples of inphase components (I) and quadrature components (Q) at the desired sampling frequency.

5. Digital circuit according to claim 4, wherein the filter means (3) comprises adder means (9, 10) to complex combine the samples of inphase components of the first and second output signals and the samples of quadrature components of the first and second output signals.

6. Digital circuit according to any of claims 2 to 5, wherein each of the two linear filter devices (F1, F2) comprises a finite impulse response filter.

7. Digital circuit according to any of claims 1 to 6, wherein the non-linear transforming means (5, 6, 7) comprises a chain of registers (5, 6) and at least one multiplier (7).

8. Digital circuit according to claim 7, wherein the sampling frequency is an integer multiple of the reciprocity of the clock period applied to the registers (5, 6).

9. Digital circuit according to any of claims 1 to 8, comprising means (1) for converting a unipolar binary signal ($a_k$) into a bipolar binary signal ($x_k$).

10. Digital circuit according to claim 9, comprising means (1) for providing a coded a bipolar binary signal ($x_k$).

11. Digital circuit according to any of claims 1 to 10, comprising means for oversampling (8) the first and second complex signal samples ($x1_k$, $x2_k$).

12. Digital circuit according to any of claims 1 to 11, wherein the linear filter means (3) is followed by means for performing a digital to analogue conversion and a lowpass filtering.

13. Digital circuit according to any of claims 1 to 12, wherein the digital circuit is adapted to be used in a mobile radio system, especially in a mobile radio system following the GSM standard.

14. Digital circuit according to any of claims 1 to 13, wherein the digital circuit is adapted to operate with amplitude modulated pulse signals.

15. A mobile radio system, especially a GSM-based system comprising a digital circuit according to any of the preceding claims.

Fig.1

**European Patent Office**

## EUROPEAN SEARCH REPORT

Application Number

EP 01 30 6511

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | WO 99 33238 A (NORTEL MATRA CELLULAR ;GEORGEAUX ERIC (FR); DORNSTETTER JEAN LOUIS) 1 July 1999 (1999-07-01) <br> * page 1, line 26 - line 31 * <br> * page 2, line 16 - line 19 * <br> * page 5, line 19 - line 20 * <br> * page 6, line 7 - line 12 * <br> * page 10, line 30 * <br> * page 11, line 13 - line 27 * <br> * page 30, line 31 - line 32 * <br> * page 12, line 15 - line 19 * <br> * figures 2,3 * | 1-15 | H04L27/20 |
| X | BALTERSEC ET AL: "Linear MMSE channel estimation for GSM" GLOBAL TELECOMMUNICATION COFERENCE - GLOBECOM 99, XP010373407 <br> * page 2523, right-hand column, line 11 - line 13 * <br> * figure 2 * | 1-3,7, 12-15 | |
| | | | TECHNICAL FIELDS SEARCHED (Int.Cl.7) |
| | | | H04L |

The present search report has been drawn up for all claims

| Place of search | Date of completion of the search | Examiner |
|---|---|---|
| BERLIN | 11 December 2001 | Farese, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 01 30 6511

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2001

| Patent document cited in search report | Publication date | Patent family member(s) | | Publication date |
|---|---|---|---|---|
| WO 9933238 A | 01-07-1999 | FR | 2773032 A1 | 25-06-1999 |
| | | CN | 1284228 T | 14-02-2001 |
| | | EP | 1044543 A1 | 18-10-2000 |
| | | WO | 9933238 A1 | 01-07-1999 |

EPO FORM P0459

For more details about this annex : see Official Journal of the European Patent Office, No. 12/82